(19) Europäisches Patentamt
European Patent Office
Office européen des brevets

(11) EP 4 275 888 A1

(12) **EUROPEAN PATENT APPLICATION**
published in accordance with Art. 153(4) EPC

(43) Date of publication:
15.11.2023 Bulletin 2023/46

(51) International Patent Classification (IPC):
*B32B 27/00* (2006.01)    *B32B 27/32* (2006.01)
*B65D 65/40* (2006.01)

(21) Application number: 21917644.3

(22) Date of filing: 15.12.2021

(52) Cooperative Patent Classification (CPC):
B32B 27/00; B32B 27/32; B65D 65/40

(86) International application number:
PCT/JP2021/046180

(87) International publication number:
WO 2022/149423 (14.07.2022 Gazette 2022/28)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 06.01.2021 JP 2021001098

(71) Applicant: Prime Polymer Co., Ltd.
Tokyo 104-0028 (JP)

(72) Inventors:
• TSUCHIDA Hayato
Ichihara-shi, Chiba 299-0108 (JP)
• SUZUKI Masao
Ichihara-shi, Chiba 299-0108 (JP)
• SAITOU Tetsuya
Ichihara-shi, Chiba 299-0108 (JP)

(74) Representative: J A Kemp LLP
80 Turnmill Street
London EC1M 5QU (GB)

(54) **SEALANT FILM AND USAGE THEREOF**

(57)    An object of the present invention is to provide a sealant film having sufficient durability (oil resistance) practically required when oils and fats, in particular, oils and fats having a component extracted from spice are filled and packaged, and then, for example, stored and transported, and a packaging bag made of the film, and the present invention relates to a single-layer or multi-layer sealant film composed of an ethylene polymer, the sealant film including, on a surface layer of the sealant film, a layer composed of an ethylene polymer (A) satisfying following requirements (i) to (iii):

(i) a density is in a range of more than 910 kg/m$^3$ to less than 940 kg/m$^3$;
(ii) a melt flow rate (MFR) at 190°C and a load of 2.16 kg in accordance with JIS K7210-1 is in a range of 0.1 to 20 g/10 min; and
(iii) a content of a copolymer (A2) of ethylene and an $\alpha$-olefin having 4 or less carbon atoms is 0% by mass or more and 50% by mass or less, and a content of a copolymer (A1) of ethylene and an $\alpha$-olefin having 5 or more carbon atoms is 26% by mass or more and 100% by mass or less.

EP 4 275 888 A1

## Description

### Technical Field

The present invention relates to a sealant film suitable for heat sealing layers of packages, a laminate having the sealant film, and applications thereof, and more specifically relates to a sealant film having excellent durability (oil resistance) to oils and fats having a component extracted from spice, and applications thereof.

### Background Art

A multi-layer packaging film composed of a laminate in which a sealant layer is laminated through a laminate layer or an intermediate layer on a base material is used for packages containing a liquid or a viscous material, or a liquid or viscous material containing insoluble matter, and a liquid packaging bag in which, for example, a liquid is filled from an opening of a bag-like article with a sealant layer put inside and the opening is closed by heat sealing is known.

The packaging bag is often fabricated by heat sealing three sides or four sides of a film, and when, for example, a liquid is filled at a high speed, the liquid may be leaked out from the heat sealing part. Therefore, a laminate for a packaging bag having increased high-speed filling properties is proposed.

Patent Literatures 1 to 3 disclose methods using specific materials having a high viscosity at a low shear rate and a low viscosity at a high shear rate when being used for the packaging bag for a liquid or a viscous material in an automatic filling machine, that is, resin compositions having a ratio of a high shear rate to a low shear rate measured at a temperature near the actual filling temperature in a specific range. In particular, a specific example in which a composition of an ethylene/1-hexene copolymer and a high-pressure low-density polyethylene is used for an intermediate layer placed between a base material and a sealant layer is disclosed.

Patent Literature 4 proposes a laminate obtained by laminating a sealant layer (B) containing an ethylene/$\alpha$-olefin copolymer having a density in a range of 890 to 910 kg/m$^3$ and a specific amount of heat of fusion, and an intermediate layer (C) in contact with the sealant layer (B).

However, it is found that oil resistance is insufficient, when the above laminates are used as the packaging material in the case of packaging a material to be packaged containing oils and fats, above all, a material to be packaged containing oils and fats having a component extracted from spice.

### Citation List

### Patent Literature

     Patent Literature 1: JP 2012-139848 A
     Patent Literature 2: JP 2012-139849 A
     Patent Literature 3: JP 2012-139854 A
     Patent Literature 4: WO 2019/181842

### Summary of Invention

### Technical Problem

An object of the present invention is to provide a sealant film having sufficient durability (oil resistance) practically required when oils and fats, in particular, oils and fats having a component extracted from spice are filled and packaged, and then, for example, stored and transported, and a packaging bag made of the film.

### Solution to Problem

The present inventors have intensively studied to solve the above problem, and as a result, found that the above problem can be solved by providing the sealant film shown below and the packaging bag made of the film, thereby completing the present invention.

Accordingly, the present invention includes the following aspects [1] to [14].

    [1] A single-layer or multi-layer sealant film composed of an ethylene polymer, the sealant film including:
    on a surface layer of the sealant film, a layer composed of an ethylene polymer (A) satisfying following requirements (i) to (iii):

(i) a density is in a range of more than 910 kg/m$^3$ to less than 940 kg/m$^3$;
(ii) a melt flow rate (MFR) at 190°C and a load of 2.16 kg in accordance with JIS K7210-1 is in a range of 0.1 to 20 g/10 min; and
(iii) a content of a copolymer (A2) of ethylene and an α-olefin having 4 or less carbon atoms is 0% by mass or more and 50% by mass or less, and a content of a copolymer (A1) of ethylene and an α-olefin having 5 or more carbon atoms is 26% by mass or more and 100% by mass or less.

[2] The sealant film according to the item [1], wherein the density of the ethylene polymer (A) is in a range of more than 910 kg/m$^3$ to 919 kg/m$^3$.

[3] The sealant film according to the item [1], wherein the melt flow rate (MFR) of the ethylene polymer (A) is in a range of more than 1.0 g/10 min to 3.0 g/10 min.

[4] The sealant film according to the item [1], wherein the ethylene polymer (A) further has a following requirement (iv):

(iv) a molten resin is capable of being wound without being cut off under conditions of an extrusion rate of 15 mm/min and a winding rate of 15 m/min from an orifice having a nozzle diameter of 2.095 mmφ and a nozzle length of 8 mm under conditions of a resin temperature of 190°C and a melting time of 6 min, and a melt tension (mN) being a resistance force generated at this time satisfies a following expression:

$$\text{melt tension} \leq 180 \times e^{(-0.7 \times \text{MFR})} + 30.$$

[5] The sealant film according to the item [1], wherein the ethylene polymer (A) has a ratio of an amount of heat of fusion (Hh/Ht) less than 10%, the ratio of the amount of heat of fusion (Hh/Ht) being an amount of heat of fusion (Hh) determined from a DSC curve at 120°C or higher to a total amount of heat of fusion (Ht) determined from a DSC curve of DSC measurement.

[6] The sealant film according to the item [1], wherein the sealant film is composed of two layers, a laminate layer and a heat sealing layer, and at least the heat sealing layer is a layer composed of the ethylene polymer (A).

[7] The sealant film according to the item [6], wherein the laminate layer is a layer composed of an ethylene polymer (C) satisfying following requirements (a) and (b):

(a) a density is in a range of 900 to 940 kg/m$^3$; and
(b) a melt flow rate (MFR) measured under conditions of 190°C and a load of 2.16 kg in accordance with JIS K7210-1 is in a range of 0.01 to 20 g/10 min.

[8] The sealant film according to the item [1], wherein the sealant film is composed of three layers, a laminate layer, an intermediate layer, and a heat sealing layer, and at least the heat sealing layer is a layer composed of the ethylene polymer (A).

[9] The sealant film according to the item [8], wherein the laminate layer is a layer composed of an ethylene polymer (C) satisfying following requirements (a) and (b):

(a) a density is in a range of 900 to 940 kg/m$^3$; and
(b) a melt flow rate (MFR) measured under conditions of 190°C and a load of 2.16 kg in accordance with JIS K7210-1 is in a range of 0.01 to 20 g/10 min.

[10] The sealant film according to the item [8], wherein the intermediate layer is a layer composed of an ethylene polymer (C) satisfying following requirements (a) and (b):

(a) a density is in a range of 900 to 940 kg/m$^3$; and
(b) a melt flow rate (MFR) measured under conditions of 190°C and a load of 2.16 kg in accordance with JIS K7210-1 is in a range of 0.01 to 20 g/10 min.

[11] A laminate obtained by laminating a base material layer and the sealant film according to any one of the items [1] to [10].

[12] The laminate according to the item [11], wherein lamination of the base material layer and the sealant film is carried out by bonding them by dry lamination.

[13] A packaging bag formed from the laminate according to the item [11] or the item [12], the packaging bag having the sealant film as an inner surface.

[14] The packaging bag according to the item [13] including a component derived from spice as a content.

**Advantageous Effects of Invention**

Since the sealant film of the present invention has sufficient durability (oil resistance) practically required when oils and fats, in particular, oils and fats having a component extracted from spice are filled and packaged, and then, for example, stored and transported, it is particularly suitable for packaging materials, and the package using the sealant film of the present invention has excellent durability and enables storage in a higher temperature environment or for a longer time (based on the Arrhenius law) .

**Description of Embodiments**

<Ethylene polymer (A)>

The ethylene polymer (A) that forms the surface layer of the sealant film of the present invention (hereinafter, also referred to as "heat sealing layer, laminate layer") is an ethylene polymer satisfying the following requirements (i) to (iii) .

Note that, in the present invention, an indication of 0 to 2 includes 0, and also includes 1 and 2.

<Requirement (i)>

The density is in a range of more than 910 $kg/m^3$ to less than 940 $kg/m^3$, preferably more than 910 $kg/m^3$ to 930 $kg/m^3$, more preferably more than 910 $kg/m^3$ to 920 $kg/m^3$, and most preferably more than 910 $kg/m^3$ to 919 $kg/m^3$.

When the density satisfies the above range, a sealant film having excellent low temperature heat sealing properties, heat sealing strength, and oil resistance can be obtained.

<Requirement (ii)>

The melt flow rate (MFR) at 190°C and a load of 2.16 kg in accordance with JIS K7210-1 is in a range of 0.1 to 20 g/10 min, preferably 0.3 to 15 g/10 min, more preferably 0.5 to 10 g/10 min, further preferably 0.5 to 5 g/10 min, and most preferably more than 1.0 g/10 min to 3.0 g/10 min.

When the MFR satisfies the above range, a sealant film having good film formability and a good appearance can be obtained. In particular, when an ethylene polymer (A) in which the MFR satisfies the most preferable range is used, a sealant film having more excellent oil resistance can be obtained.

<Requirement (iii)>

In the ethylene polymer (A), the content of a copolymer (A2) of ethylene and an $\alpha$-olefin having 4 or less carbon atoms is in a range of 0 to 50% by mass, preferably 0 to 40% by mass, and more preferably 0 to 30% by mass, and is further preferably 0% by mass, and the content of a copolymer (A1) of ethylene and an $\alpha$-olefin having 5 or more carbon atoms is in a range of 26 to 100% by mass, preferably in a range of 30 to 100% by mass, more preferably in a range of 50 to 100% by mass, and further preferably in a range of 75 to 100% by mass, provided that the total amount of the copolymer (A2) and the copolymer (A1) is 100% by mass.

Note that, the ethylene polymer (A) according to the present invention may contain the ethylene polymer (A3) mentioned below in addition to the above copolymer (A2) and copolymer (A1).

When the ethylene polymer (A) according to the present invention contains the ethylene polymer (A3) in addition to the above copolymer (A2) and the above copolymer (A1), the total amount of the copolymer (A2), the copolymer (A1), and the ethylene polymer (A3) is 100% by mass.

The ethylene polymer (A) according to the present invention preferably has the following requirement (iv) in addition to the above requirements (i) to (iii).

<Requirement (iv)>

In the ethylene polymer (A), a molten resin is capable of being wound without being cut off under conditions of an extrusion rate of 15 mm/min and a winding rate of 15 m/min from an orifice having a nozzle diameter of 2.095 mm$\varphi$ and a nozzle length of 8 mm under conditions of a resin temperature of 190°C and a melting time of 6 min, and the melt tension (mN) being a resistance force generated at this time satisfies the following expression:

$$\text{melt tension} \leq 180 \times e^{(-0.7 \times MFR)} + 30.$$

<Requirement (v)>

The ethylene polymer (A) according to the present invention preferably has the following requirement (v) in addition to the above requirements (i) to (iv).

The ratio of the amount of heat of fusion (Hh/Ht) which is the ratio of the amount of heat of fusion (Hh) determined from a DSC curve at 120°C or higher to the total amount of heat of fusion (Ht) determined from a DSC curve of DSC measurement is less than 10.

When Hh/Ht of the ethylene polymer (A) according to the present invention is less than 10, the sealant film having a layer composed of the ethylene polymer (A) is more excellent from the viewpoint of strength.

The ratio of the amount of heat of fusion of the ethylene polymer (A) in the present invention is determined by calculated as a ratio of the amount of heat of fusion at 120°C or higher (Hh/Ht), which is the ratio representing the amount of the component at 120°C or higher, from the total amount of heat of fusion (Ht) determined from a DSC curve of DSC measurement and the amount of heat of fusion (Hh) determined from a DSC curve at 120°C or higher.

<<Ethylene/$\alpha$-olefin copolymer (A1)>>

The ethylene/$\alpha$-olefin copolymer (A1) [hereinafter, abbreviated as the "copolymer (A1)" in some cases], which is one of the polymers contained in the ethylene polymer (A) according to the present invention, is a copolymer of ethylene and an $\alpha$-olefin having 5 or more carbon atoms, and the copolymer (A1) may be one or a mixture (composition) of two or more copolymers (A1). The mixture (composition) of two or more copolymers (A1) may employ various known methods, such as mixing of two or more copolymers (A1) at a polymerization stage by a multi-stage process, dry-blending of two or more copolymers (A1), and melting and mixing by an extruder.

The $\alpha$-olefin having 5 or more carbon atoms that constitutes the copolymer (A1) according to the present invention is preferably an $\alpha$-olefin having 5 to 20 carbon atoms, and examples thereof include 1-hexene, 1-pentene, 4-methyl-1-pentene, 1-heptene, 1-octene, and 1-decene. Among these $\alpha$-olefins, an $\alpha$-olefin having 5 to 10 carbon atoms is particularly preferable. These $\alpha$-olefins may be contained alone, or two or more $\alpha$-olefins may be contained.

In addition, the copolymer (A1) according to the present invention alone satisfies the above requirements (i) to (iii), and preferably the above requirements (i) to (v) possessed by the above ethylene polymer (A) according to the present invention.

<<Ethylene/$\alpha$-olefin copolymer (A2)>>

The ethylene/$\alpha$-olefin copolymer (A2) [hereinafter, abbreviated as the "copolymer (A2)" in some cases], which is one of the polymers contained in the ethylene polymer (A) according to the present invention, is a copolymer of ethylene and an $\alpha$-olefin having 4 or less carbon atoms.

The $\alpha$-olefin having 4 or less carbon atoms that constitutes the copolymer (A2) is propylene and 1-butene.

In the copolymer (A2) according to the present invention, the density and MFR are not particularly limited, as long as the ethylene polymer (A) containing the copolymer (A2) and the above copolymer (A1) satisfies the above requirements (i) to (iii), and preferably satisfies the above requirements (i) to (v), but the density is usually in a range of more than 910 kg/m³ to less than 940 kg/m³, preferably 915 to less than 940 kg/m³, and more preferably 920 to 930 kg/m³, and the MFR is usually in a range of 0.1 to 20 g/10 min, preferably 0.3 to 15 g/10 min, more preferably 0.5 to 10 g/10 min, and further preferably 0.5 to 5 g/10 min.

<<Ethylene polymer (A3)>>

Examples of the ethylene polymer (A3) other than the above copolymer (A2) and copolymer (A1) that may be contained in the ethylene polymer (A) according to the present invention include a homopolymer of ethylene and high-pressure low-density polyethylene (HP-LDPE).

In the copolymer (A3) according to the present invention, the density and MFR are not particularly limited, as long as the ethylene polymer (A) containing the copolymer (A3), the above copolymer (A1), and the above copolymer (A2) satisfies the above requirements (i) to (iii), and preferably satisfies the above requirements (i) to (v), but the density is usually in a range of 900 to 940 kg/m³, preferably 910 to 930 kg/m³, and more preferably 914 to 927 kg/m³, and the MFR is usually in a range of 0.01 to 70 g/10 min, preferably 0.05 to 20 g/10 min, and more preferably 0.1 to 5 g/10 min.

<Method for producing ethylene/α-olefin copolymer (A1)>

The ethylene/α-olefin copolymer (A1) according to the present invention can be prepared by using an olefin polymerization catalyst, for example, a metallocene-based, titanium-based, chrome-based, or phenoxyimine-based catalyst. The copolymer (A1) may be a linear or branched low density polyethylene. In particular, when a metallocene-based olefin polymerization catalyst is used for preparation, a polymer having a narrow molecular weight distribution can be obtained, and components having a low molecular weight and a low density are less produced, so that the copolymer (A1) thus prepared is effective for applications relating to the present invention, that is, applications for packaging materials to be packaged such as foods and medicaments.

The metallocene catalyst is usually formed from a metallocene catalyst component (a1) composed of a transition metal compound of IVB group in the periodic table that at least has a ligand having a cyclopentadienyl skeleton, an organoaluminumoxy compound catalyst component (b), a particulate carrier (c), and, if necessary, an organoaluminum compound catalyst component (d) and an ionized ionic compound catalyst component (e).

The copolymer (A1) according to the present invention can be produced by copolymerizing ethylene and an α-olefin having 5 or more carbon atoms in the presence of a so-called metallocene-based olefin polymerization catalyst containing a metallocene catalyst component described in, for example, JPH 6-9724 A, JPH 6-136195 A, JPH 6-136196 A, and JPH 6-207057 A.

<Sealant film>

The sealant film of the present invention is a single-layer or multi-layer sealant film composed of the ethylene polymer, and has a layer composed of the above ethylene polymer (A) on the surface layer of the sealant film.

The sealant film of the present invention is a film having a laminate surface which is laminated on the base material layer mentioned below and a heat sealing surface capable of heat sealing (capable of sealing) a material to be packaged.

Since the sealant film of the present invention has excellent thermal adhesiveness (heat sealing properties), and also has oil resistance, in particular, oil resistance to oils and fats having a component extracted from spice, it can be suitably used as a packaging material, in particular, as a sealant layer of a packaging material.

When the sealant film of the present invention is a single layer, the sealant film is composed of the above ethylene polymer (A). The thickness of the sealant film can be arbitrarily selected depending on the type of material to be packaged, and is usually in a range of 5 to 100 μm.

When the sealant film of the present invention is a multilayer film, the sealant film is composed of a layer laminated on (bonded with) the base material layer mentioned below (hereinafter, referred to as the "laminate layer" in some cases) and a heat sealing layer, and at least the heat sealing layer is composed of the above ethylene polymer (A).

Also when the sealant film of the present invention is a two-layer film having the laminate layer and the heat sealing layer, the thickness of the film can be arbitrarily selected depending on the type of material to be packaged, and usually, the thickness of the laminate layer is in a range of 1 to 50 pm, and preferably 5 to 30 pm, the thickness of the heat sealing layer is in a range of 1 to 50 pm, and preferably 5 to 30 μm, and the thickness of the total layer is in a range of 5 to 100 μm.

When the sealant film of the present invention is a multilayer film of three or more layers, it is composed of the laminate layer, the intermediate layer, and the heat sealing layer, and at least the heat sealing layer is composed of the above ethylene polymer (A).

Also when the sealant film of the present invention is the multilayer film of three or more layers having the laminate layer, the intermediate layer, and the heat sealing layer, the thickness of the film can be arbitrarily selected depending on the type of material to be packaged, and usually, the thickness of the laminate layer is in a range of 1 to 50 pm, and preferably 5 to 30 pm, the thickness of the intermediate layer is in a range of 1 to 50 pm, and preferably 5 to 30 pm, 1 to 50 pm, and preferably 5 to 30 μm, and the thickness of the total layer is in a range of 5 to 100 μm.

When the sealant film of the present invention is the two-layer film having the laminate layer and the heat sealing layer, or the multilayer film of three or more layers having the laminate layer, the intermediate layer, and the heat sealing layer, at least the heat sealing layer is a layer composed of the above ethylene polymer (A).

Of course, all the layers of the sealant film of the present invention may be layers composed of the above ethylene polymer (A), and in this case, all the layers may be layers composed of the same ethylene polymer (A), or may be layers each composed of different ethylene polymers (A).

When the sealant film of the present invention is the two-layer film having the laminate layer and the heat sealing layer, or the multilayer film of three or more layers having the laminate layer, the intermediate layer, and the heat sealing layer, the laminate layer or the intermediate layer may be a layer composed of an ethylene polymer other than the above ethylene polymer (A).

With respect to the ethylene polymer other than the above ethylene polymer (A) composing the laminate layer and/or the intermediate layer of the sealant film of the present invention, the polymer that forms the layer is preferably an ethylene polymer (C).

<Ethylene polymer (C)>

When the sealant film of the present invention is the multi-layer film, the ethylene polymer (C) that may form some layers, preferably forms the laminate layer and the intermediate layer is a homopolymer of ethylene or a copolymer of ethylene and an $\alpha$-olefin having 3 or more carbon atoms, the copolymer being a polymer mainly containing ethylene, and including polyethylene resins (ethylene polymers) produced and distributed under the names of high-pressure low-density polyethylene (HP-LDPE), linear low-density polyethylene (LLDPE), medium-density polyethylene (MDPE), and high-density polyethylene (HDPE).
The ethylene polymer may be a single polymer, or a composition (mixture) of two or more ethylene polymers.
The $\alpha$-olefin having 3 or more carbon atoms that forms the ethylene polymer (C) according to the present invention is preferably an $\alpha$-olefin having 3 to 20 carbon atoms, and examples of the $\alpha$-olefin include propylene, 1-butene, 1-hexene, 1-pentene, 4-methyl-1-pentene, 1-heptene, 1-octene, and 1-decene. These may be used alone or in combination of two or more.
The ethylene polymer (C) according to the present invention is not particularly limited, as long as the object of the present invention is satisfied. Preferably, the density and MFR satisfy the following requirements (a) and (b) .

(a) The density is in a range of 900 to 940 kg/m$^3$, preferably 910 to 930 kg/m$^3$, and more preferably 920 to 930 kg/m$^3$.
(b) The melt flow rate (MFR) measured under conditions of 190°C and a load of 2.16 kg in accordance with JIS K7210-1 is in a range of 0.01 to 20 g/10 min, preferably 0.05 to 20 g/10 min, and more preferably 0.1 to 5 g/10 min.

<Method for producing sealant film>

The sealant film of the present invention may be various known film production methods (formation methods), for example, casting using a flat die such as T-die, or inflation using a circular die.
When the sealant film is the two-layer film, it can be produced by so-called coextrusion in which, for example, the above ethylene polymer (A) for forming the laminate layer and the above ethylene polymer (A) for forming the heat sealing layer are molten individually by two extruders and formed into a two-layer film from a die. When the sealant film is the multilayer film of three or more layers, it can be produced by so-called coextrusion in which, for example, the above ethylene polymer (A) for forming the laminate layer, the above ethylene polymer (A) for forming the intermediate layer, and the above ethylene copolymer (A) for forming the heat sealing layer are molten individually by three extruders and formed into a multilayer film of three or more layers from a die. Among them, coextrusion is preferable since the multilayer film can be easily formed and the multilayer film to be obtained has excellent interlayer adhesiveness.
Coextrusion may be casting using a flat die such as T-die, or inflation using a circular die.
The sealant film of the present invention having two or more layers is not limited to the above production method, and for example, a method in which a film to be the laminate layer is produced (formed) in advance, and then the above ethylene copolymer (A) to be the intermediate layer and the heat sealing layer are extrusion laminated as needed on the surface of the film can be employed.
The formation temperature of the sealant film is not particularly limited as long as it is a temperature that allows, for example, the ethylene polymer (A) to be melt extruded, and is usually in a range of 130 to 350°C, and preferably 160 to 250°C.

<Laminate>

The laminate of the present invention is a laminate obtained by laminating a base material layer and the above sealant film, and is usually in a film form or a sheet form.
The laminate of the present invention is a laminate obtained by laminating a base material layer and the above sealant film, and the above sealant film has thermal adhesiveness (heat sealing properties), so that it can be suitably used for packaging materials.
The material to be packaged that can be packaged by the packaging material of the present invention include not only foods and medicaments, but also various articles that can be packaged, such as daily necessaries, detergents, and agricultural chemicals. The form of the material to be packaged may be liquid or solid.
Since the laminate of the present invention has excellent oil resistance in addition to excellent thermal adhesiveness (heat sealing properties), it is particularly preferable as the packaging material for oily foods such as oils and fats having a component extracted from spice, regardless of liquid or solid.

<<Base material layer>>

The base material layer that constitutes the laminate of the present invention is a material that is an external surface of the packaging material and has a relatively high rigidity and strength. Specifically, the base material layer is a film containing at least one thermoplastic resin selected from the group consisting of polyamide resins such as nylon 11 and nylon 12, polyester resins such as polyethylene terephthalate and polybutylene terephthalate, polyolefin resins such as polyethylene resin and polypropylene resin, polyvinylidene chloride resins, saponified ethylene-vinyl acetate copolymers, polycarbonate resins, polystyrene resins, and acrylic resins. The film may be a non-stretched film, or a monoaxially or biaxially stretched film. The base material layer is not limited to the above films, and may be a laminate with a metal foil, a ceramic vapor-deposited film such as a metal vapor-deposited film or an inorganic oxide vapor-deposited film, a paper, a non-woven fabric, or a film containing a thermoplastic resin.

The thickness of the base material layer according to the present invention is usually in a range of 5 to 50 $\mu$m.

The metal foil is not particularly limited by the material and thickness, and for example, an aluminum foil, a tin foil, a lead foil, a zinc plated thin steel plate, a thin film obtained from an ionized metal by an electrolysis method, and an iron foil each having a thickness of 5 to 50 $\mu$m are used.

Also, the metal vapor-deposited film is not particularly limited by the material and thickness. Examples of the vapor-deposited metal include aluminum and zinc, and one having a thickness of 0.01 to 0.2 $\mu$m is usually preferably used. The vapor deposition method is not particularly limited, and well-known methods such as a vacuum vapor deposition method, an ion plating method, and a sputtering method are used.

In the ceramic vapor-deposited film, examples of the ceramic to be vapor deposited include silicon oxides represented by a general formula SiOx ($0.5 \leq x \leq 2$), metal oxides such as glass, alumina, magnesium oxide, and tin oxide, and metal fluorides such as fluorite and selenium fluoride. The metal oxide may include trace metals, other metal oxides, and metal hydroxides. Vapor deposition can be carried out by applying various vapor deposition methods described above to at least one surface of the film. Examples of the film to be vapor-deposited include, but are not particularly limited to, transparent films such as a (stretched) polyester film, a (stretched) polypropylene film, and a (stretched) polyamide film.

When the base material layer according to the present invention and the above sealant film of the present invention are laminated (bonded), the surface of the base material layer in contact with the laminate surface or the laminate layer of the sealant film may be subjected to surface activation treatment such as corona treatment, flame treatment, plasma treatment, or undercoating treatment, or one or more adhesives selected from the group consisting of a urethane-based adhesive, an isocyanate-based adhesive, a polyester, and a mixture and a reaction product of a polyol and an isocyanate compound may be applied thereto, to improve the adhesiveness between the base material layer and the above sealant film of the present invention.

<Method for producing laminate>

The laminate of the present invention may be produced by various known production methods. For example, a method in which after or without subjecting the surface of the base material layer of the present invention in contact with the laminate surface or the laminate layer of the sealant film of the present invention to surface activation treatment such as corona treatment, flame treatment, plasma treatment, ozone treatment, or undercoating treatment, and after or without applying one or more adhesives selected from the group consisting of a urethane-based adhesive, an isocyanate-based adhesive, a polyester, and a mixture and a reaction product of a polyol and an isocyanate compound to the surface, the above sealant film is melt extruded (extrusion laminated) to bond (laminate) the base material layer and the sealant film; and when the base material layer is made of a thermoplastic resin, a method in which the thermoplastic resin to be the base material layer and the above ethylene polymer (A) to be the sealant film of the present invention are coextruded using a multi-layer die to obtain a laminate film, or a method (dry lamination method) in which the sealant film of the present invention obtained in advance by the above production method (formation method) and the base material layer are bonded (laminated) through one or more adhesives selected from the group consisting of a urethane-based adhesive, an isocyanate-based adhesive, a polyester, and a mixture and a reaction product of a polyol and an isocyanate compound may be employed.

<Packaging bag>

The packaging bag of the present invention is a bag using the sealant film of the above laminate as the inner surface. The form of the package of the present invention is not particularly limited, as long as the sealant film is used as the inner surface, and the package of the present invention may have various known forms.

Specifically, the packaging bag can be made by various known production methods, for example, a method in which the above laminate is folded so that the sealant film becomes the inner surface, one folded side is heat sealed to form a cylindrical shape, and then the lower side is heat sealed to form a bag shape, a method in which two laminates are superposed so that the sealant films are faced to each other, and three sides are heat sealed to form a bag shape, or a method in which the sealant film of the above laminate and a film or sheet capable of being heat sealed are superposed, and three sides are heat sealed to form a bag shape.

The form of the material to be packaged that can be packaged by the packaging bag of the present invention is not limited, and may be liquid or solid. Examples of the liquid and viscous material include foods and medicaments. The liquid and viscous material may include solid materials, such as dressing containing granules.

**Examples**

Hereinafter the present invention will be described in detail with reference to Examples, but the present invention is not limited to only these Examples.

[Example 1]

A laminate (packaging film) was fabricated by a dry laminate method as follows.

Into an extruder for an inner layer (heat sealing layer), an extruder for an intermediate layer, and an extruder for an outer layer (laminate layer) of a three-type three-layer inflation forming apparatus (die diameter: 225 mmφ, extruder: 50 mmφ × 3) manufactured by Hosokawa Alpine AG, Evolue (R) SP1523 [manufactured by Prime Polymer Co., Ltd., density (JIS K7112) = 0.916 g/cm$^3$, MFR (JIS K7210, 190°C) = 2.0 g/10 min] which is an ethylene/1-hexene copolymer produced by a multi-stage gas-phase polymerization method was loaded, and a sealant film composed of three layers having a thickness of 50 μm in which the thickness ratio of the inner layer:the intermediate layer:the outer layer is 1:1:1 under the conditions of the extruder set temperature: 190°C, die set temperature: 200°C, drawing rate: 25 m/min, and a folded width of 700 mm was formed.

At the time of forming the three-layer film, the film in which the side of the laminate layer (outer layer) was subjected to corona treatment (45 dyn) was obtained. A stretched nylon base film (Emblem manufactured by Unitika Ltd.) having a thickness of 15 μm was dry-laminated on the side of the laminate layer of the three-layer film by a dry laminator (adhesive: TAKELAC A315, amount of applied: 3 g/m$^2$) to obtain a packaging film for evaluation.

The oil resistance of the packaging film obtained was evaluated by the method described below. The results are shown in Table 1.

[Example 2]

A laminate (packaging film) was fabricated by an extrusion laminate method as follows.

Extrusion lamination was carried out by adjusting the extrusion output such that the coating thickness was 25 μm when the processing rate was 80 m/min under conditions of a cooling roll surface temperature of 30°C, a die width of 500 mm, and a die lip opening of 0.9 mm using an extrusion lamination apparatus in which the temperature of the resin extruded from the T die of an extruder having a diameter of 60 mmφ was set to be 295°C, and by extruding the laminate layer material such that the drawing rate was 80 m/min and the coating thickness was 25 μm while blowing ozone at a laminate part to a base material on which an anchor coating agent is coated, thereby forming a laminate layer. As the base material on which an anchor coating agent is coated, a biaxially stretched nylon film (ONY #15 manufactured by TOYOBO CO., LTD.) having a width of 500 mm and a thickness of 15 μm on which an isocyanate-based anchor coating agent (TAKELAC(R) A-3210 and TAKENATE (R) A-3075 manufactured by Mitsui Chemicals, Inc.) was coated by a gravure roll was used, and as the laminate layer material, Evolue (R) SP13100C [manufactured by Prime Polymer Co., Ltd., density (JIS K7112) = 0.914 g/cm$^3$, MFR (JIS K7210, 190°C) = 8.0 g/10 min] which is an ethylene/1-hexene copolymer produced by a multi-stage gas-phase polymerization method was used.

Further, extrusion lamination was carried out by extruding the heat sealing layer on the laminate layer using the aforementioned extrusion lamination apparatus such that the extruded resin temperature was 295°C, the drawing rate was 80 m/min, and the coating thickness was 25 μm to obtain a laminate. As the heat sealing layer, Evolue (R) SP13100C [manufactured by Prime Polymer Co., Ltd., density (JIS K7112) = 0.914 g/cm$^3$, MFR (JIS K7210, 190°C) = 8.0 g/10 min] was used. The laminate was subjected to aging in an oven at 40°C for 24 hours to obtain a packaging film for evaluation.

The liquid filling suitability of the packaging film obtained was evaluated by the method described below. The results are shown in Table 1.

[Example 3]

A packaging film for evaluation was fabricated in the same manner as in Example 1, except that a resin obtained by mixing 80 parts by mass of NEO-ZEX (R) 2512F [manufactured by Prime Polymer Co., Ltd., density (JIS K7112) = 0.924 g/cm$^3$, MFR (JIS K7210, 190°C) = 1.3 g/10 min] which is an ethylene/1-butene copolymer and 20 parts by mass of SUNTEC LD (R) M1920 [Asahi Kasei Corp., density (JIS K7112) = 0.921 g/cm$^3$, MFR (JIS K7210, 190°C) = 2.0 g/10 min] which is an ethylene homopolymer (high-pressure low-density polyethylene) by a Henschel mixer was loaded into the extruder for an intermediate layer of the inflation forming apparatus, and the oil resistance was evaluated. The results are shown in Table 1.

[Example 4]

A packaging film for evaluation was fabricated in the same manner as in Example 3, except that a resin obtained by mixing 80 parts by mass of NEO-ZEX (R) 2512F [manufactured by Prime Polymer Co., Ltd., density (JIS K7112) = 0.924 g/cm$^3$, MFR (JIS K7210, 190°C) = 1.3 g/10 min] which is an ethylene/1-butene copolymer and 20 parts by mass of SUNTEC LD (R) M1920 [Asahi Kasei Corp., density (JIS K7112) = 0.921 g/cm$^3$, MFR (JIS K7210, 190°C) = 2.0 g/10 min] which is an ethylene homopolymer (high-pressure low-density polyethylene) by a Henschel mixer was loaded into the extruder for an outer layer of the inflation forming apparatus, and the oil resistance was evaluated. The results are shown in Table 1.

[Example 5]

A packaging film for evaluation was fabricated in the same manner as in Example 4, except that a resin obtained by mixing 50 parts by mass of NEO-ZEX (R) 2512F [manufactured by Prime Polymer Co., Ltd., density (JIS K7112) = 0.924 g/cm$^3$, MFR (JIS K7210, 190°C) = 1.3 g/10 min] which is an ethylene/1-butene copolymer, 20 parts by mass of SUNTEC LD (R) M1920 [Asahi Kasei Corp., density (JIS K7112) = 0.921 g/cm$^3$, MFR (JIS K7210, 190°C) = 2.0 g/10 min] which is an ethylene homopolymer (high-pressure low-density polyethylene), and 30 parts by mass of Evolue (R) SP1523 [manufactured by Prime Polymer Co., Ltd., density (JIS K7112) = 0.916 g/cm3, MFR (JIS K7210, 190°C) = 2.0 g/10 min] which is an ethylene/1-hexene copolymer produced by a multi-stage gas-phase polymerization method by a Henschel mixer was loaded into the extruder for an inner layer of the inflation forming apparatus, and the oil resistance was evaluated. The results are shown in Table 1.

[Example 6]

A packaging film for evaluation was fabricated in the same manner as in Example 4, except that a resin obtained by mixing 25 parts by mass of SUNTEC LD (R) M1920 [Asahi Kasei Corp., density (JIS K7112) = 0.921 g/cm$^3$, MFR (JIS K7210, 190°C) = 2.0 g/10 min] which is an ethylene homopolymer (high-pressure low-density polyethylene), and 75 parts by mass of Evolue (R) SP1523 [manufactured by Prime Polymer Co., Ltd., density (JIS K7112) = 0.916 g/cm$^3$, MFR (JIS K7210, 190°C) = 2.0 g/10 min] which is an ethylene/1-hexene copolymer produced by a multi-stage gas-phase polymerization method by a Henschel mixer was loaded into the extruder for an inner layer of the inflation forming apparatus, and the oil resistance was evaluated. The results are shown in Table 1.

[Example 7]

A packaging film for evaluation was fabricated in the same manner as in Example 4, except that a resin obtained by mixing 50 parts by mass of SUNTEC LD (R) M1920 [Asahi Kasei Corp., density (JIS K7112) = 0.921 g/cm$^3$, MFR (JIS K7210, 190°C) = 2.0 g/10 min] which is an ethylene homopolymer (high-pressure low-density polyethylene), and 50 parts by mass of Evolue (R) SP1523 [manufactured by Prime Polymer Co., Ltd., density (JIS K7112) = 0.916 g/cm$^3$, MFR (JIS K7210, 190°C) = 2.0 g/10 min] which is an ethylene/1-hexene copolymer produced by a multi-stage gas-phase polymerization method by a Henschel mixer was loaded into the extruder for an inner layer of the inflation forming apparatus, and the oil resistance was evaluated. The results are shown in Table 1.

[Comparative Example 1]

A packaging film for evaluation was fabricated in the same manner as in Example 4, except that a resin obtained by mixing 80 parts by mass of NEO-ZEX (R) 2512F [manufactured by Prime Polymer Co., Ltd., density (JIS K7112) = 0.924 g/cm$^3$, MFR (JIS K7210, 190°C) = 1.3 g/10 min] which is an ethylene/1-butene copolymer and 20 parts by mass of SUNTEC LD (R) M1920 [Asahi Kasei Corp., density (JIS K7112) = 0.921 g/cm$^3$, MFR (JIS K7210, 190°C) = 2.0 g/10 min] which is an ethylene homopolymer (high-pressure low-density polyethylene) by a Henschel mixer was loaded into the extruder for an inner layer of the inflation forming apparatus, and the oil resistance was evaluated. The results are shown in Table 1.

[Comparative Example 2]

A packaging film for evaluation was fabricated in the same manner as in Example 4, except that NEO-ZEX (R) 2512F [manufactured by Prime Polymer Co., Ltd., density (JIS K7112) = 0.924 g/cm$^3$, MFR (JIS K7210, 190°C) = 1.3 g/10 min] which is an ethylene/1-butene copolymer was loaded into the extruder for an inner layer of the inflation forming apparatus, and the oil resistance was evaluated. The results are shown in Table 1.

[Comparative Example 3]

A packaging film for evaluation was fabricated in the same manner as in Example 4, except that SUNTEC LD(R) M1920 [Asahi Kasei Corp., density (JIS K7112) = 0.921 g/cm$^3$, MFR (JIS K7210, 190°C) = 2.0 g/10 min] which is an ethylene homopolymer (high-pressure low-density polyethylene) was loaded into the extruder for an inner layer of the inflation forming apparatus, and the oil resistance was evaluated. The results are shown in Table 1.

[Comparative Example 4]

A packaging film for evaluation was fabricated in the same manner as in Example 4, except that a resin obtained by mixing 75 parts by mass of SUNTEC LD (R) M1920 [Asahi Kasei Corp., density (JIS K7112) = 0.921 g/cm$^3$, MFR (JIS K7210, 190°C) = 2.0 g/10 min] which is an ethylene homopolymer (high-pressure low-density polyethylene), and 25 parts by mass of Evolue (R) SP1523 [manufactured by Prime Polymer Co., Ltd., density (JIS K7112) = 0.916 g/cm$^3$, MFR (JIS K7210, 190°C) = 2.0 g/10 min] which is an ethylene/1-hexene copolymer produced by a multi-stage gas-phase polymerization method by a Henschel mixer was loaded into the extruder for an inner layer of the inflation forming apparatus, and the oil resistance was evaluated. The results are shown in Table 1.

The melt tension (mN) of, for example, each ethylene polymer and composition (mixture) used in Examples and Comparative Examples was measured by the measurement method described above.

[Oil resistance evaluation]

Two packaging films for evaluation cut out into a size of 90 mm × 120 mm were superposed so that the heat sealing layers were brought into contact with each other, heat sealed at 10 mm from the edge of three sides under conditions of 160°C, 0.5 seconds, and 0.5 MPa, which was filled with 100 g of a mixed liquid in which vinegar, water, and chili oil were prepared at a weight ratio of 1:1:1, and the remaining one side was heat sealed in the same manner as the other three sides to obtain a packaging bag filled with the mixed liquid. The packaging bag filled with the mixed liquid was heated in the water of a predetermined temperature for 30 minutes, and thereafter, a test in which a load of 100 kg was applied thereto was carried out three times, and oil resistance was evaluated as the highest heating temperature at which a defect in the appearance including bag breaking, delamination, and peeling of the seal is not caused in all three tests.

[Table 1]

| | | | Ex. 1 | Ex. 2 | Ex. 3 | Ex. 4 |
|---|---|---|---|---|---|---|
| Laminate layer | Composition (%) | SP1523 | 100 | - | 100 | - |
| | | 2512F | - | - | - | 80 |
| | | M1920 | - | - | - | 20 |
| | | SP13100C | - | 100 | - | - |
| | Physical properties | Melt tension (mN) | 16.9 | 16.2 | 16.9 | 60.7 |
| | | 180×e^(-0.7×MFR)+30 | 74.4 | 30.7 | 74.4 | 107.7 |
| Intermediate layer | Composition (%) | SP1523 | 100 | - | - | - |
| | | 2512F | - | - | 80 | 80 |
| | | M1920 | - | - | 20 | 20 |
| | Physical properties | Melt tension (mN) | 16.9 | - | 60.7 | 60.7 |
| | | 180×e^(-0.7×MFR)+30 | 74.4 | - | 107.7 | 107.7 |

(continued)

| | | | Ex. 1 | Ex. 2 | Ex. 3 | Ex. 4 |
|---|---|---|---|---|---|---|
| Heat sealing layer | Composition (%) | SP1523 | 100 | - | 100 | 100 |
| | | 2512F | - | - | - | - |
| | | M1920 | - | - | - | - |
| | | SP13100C | - | 100 | - | - |
| | Physical properties | MFR (g/10 min) | 2.0 | 8.0 | 2.0 | 2.0 |
| | | Density (kg/m$^3$) | 916 | 914 | 916 | 916 |
| | | Ratio of heat of fusion (Hh/Ht) | 4 | 6 | 4 | 4 |
| | | Melt tension (mN) | 16.9 | 16.2 | 16.9 | 16.9 |
| | | $180 \times e^{(-0.7 \times MFR)} + 30$ | 74.4 | 30.7 | 74.4 | 74.4 |
| Oil resistance (°C) | | | 85 | 65 | 85 | 85 |

| | | | Ex. 5 | Ex. 6 | Ex. 7 |
|---|---|---|---|---|---|
| Laminate layer | Composition (%) | SP1523 | - | - | - |
| | | 2512F | 80 | 80 | 80 |
| | | M1920 | 20 | 20 | 20 |
| | | SP13100C | - | - | - |
| | Physical properties | Melt tension (mN) | 60.7 | 60.7 | 60.7 |
| | | $180 \times e^{(-0.7 \times MFR)} + 30$ | 107.7 | 107.7 | 107.7 |
| Intermediate layer | Composition (%) | SP1523 | - | - | - |
| | | 2512F | 80 | 80 | 80 |
| | | M1920 | 20 | 20 | 20 |
| | Physical properties | Melt tension (mN) | 60.7 | 60.7 | 60.7 |
| | | $180 \times e^{(-0.7 \times MFR)} + 30$ | 107.7 | 107.7 | 107.7 |
| Heat sealing layer | Composition (%) | SP1523 | 30 | 75 | 50 |
| | | 2512F | 50 | - | - |
| | | M1920 | 20 | 25 | 50 |
| | | SP13100C | - | - | - |
| | Physical properties | MFR (g/10 min) | 1.6 | 2.0 | 2.0 |
| | | Density (kg/m$^3$) | 921 | 917 | 918 |
| | | Ratio of heat of fusion (Hh/Ht) | 2 | 3 | 2 |
| | | Melt tension (mN) | 57.1 | 56.9 | 82.3 |
| | | $180 \times e^{(-0.7 \times MFR)} + 30$ | 102.5 | 84.8 | 88.7 |
| Oil resistance (°C) | | | 60 | 70 | 65 |

|  |  |  | Comp. Ex. 1 | Comp. Ex. 2 | Comp. Ex. 3 | Comp. Ex. 4 |
|---|---|---|---|---|---|---|
| Laminate layer | Composition (%) | SP1523 | - | - | - | - |
|  |  | 2512F | 80 | 80 | 80 | 80 |
|  |  | M1920 | 20 | 20 | 20 | 20 |
|  |  | SP13100C | - | - | - | - |
|  | Physical properties | Melt tension (mN) | 60.7 | 60.7 | 60.7 | 60.7 |
|  |  | $180 \times e^{(-0.7 \times MFR)} + 30$ | 107.7 | 107.7 | 107.7 | 107.7 |
| Intermediate layer | Composition (%) | SP1523 | - | - | - | - |
|  |  | 2512F | 80 | 80 | 80 | 80 |
|  |  | M1920 | 20 | 20 | 20 | 20 |
|  | Physical properties | Melt tension (mN) | 60.7 | 60.7 | 60.7 | 60.7 |
|  |  | $180 \times e^{(-0.7 \times MFR)} + 30$ | 107.7 | 107.7 | 107.7 | 107.7 |
| Heat sealing layer | Composition (%) | SP1523 | - | - | - | 25 |
|  |  | 2512F | 80 | 100 | - | - |
|  |  | M1920 | 20 |  | 100 | 75 |
|  |  | SP13100C | - | - | - | - |
|  | Physical properties | MFR (g/10 min) | 1.4 | 1.3 | 2.0 | 2.0 |
|  |  | Density (kg/m$^3$) | 923 | 924 | 921 | 920 |
|  |  | Ratio of heat of fusion (Hh/Ht) | 0 | 0 | 0 | 0 |
|  |  | Melt tension (mN) | 60.7 | 22 | 85.6 | 107.7 |
|  |  | $180 \times e^{(-0.7 \times MFR)} + 30$ | 107.7 | 108.8 | 80.3 | 97.6 |
| Oil resistance (°C) |  |  | 50 | 50 | <18 | 35 |

7

Industrial Applicability

The sealant film and the packaging bag made of the film of the present invention have excellent durability to packaging materials of conventional oils and fats, in particular, oils and fats having a component extracted from spice, and enables storage in a higher temperature environment or for a longer time (based on the Arrhenius law) .

**Claims**

1. A single-layer or multi-layer sealant film composed of an ethylene polymer, the sealant film comprising:
   on a surface layer of the sealant film, a layer composed of an ethylene polymer (A) satisfying following requirements (i) to (iii):

   (i) a density is in a range of more than 910 kg/m$^3$ to less than 940 kg/m$^3$;
   (ii) a melt flow rate (MFR) at 190°C and a load of 2.16 kg in accordance with JIS K7210-1 is in a range of 0.1 to 20 g/10 min; and
   (iii) a content of a copolymer (A2) of ethylene and an $\alpha$-olefin having 4 or less carbon atoms is 0% by mass or more and 50% by mass or less, and a content of a copolymer (A1) of ethylene and an $\alpha$-olefin having 5 or more carbon atoms is 26% by mass or more and 100% by mass or less.

2. The sealant film according to claim 1, wherein the density of the ethylene polymer (A) is in a range of more than 910 kg/m$^3$ to 919 kg/m$^3$.

3. The sealant film according to claim 1, wherein the melt flow rate (MFR) of the ethylene polymer (A) is in a range of more than 1.0 g/10 min to 3.0 g/10 min.

4. The sealant film according to claim 1, wherein the ethylene polymer (A) further has a following requirement (iv) :
   (iv) a molten resin is capable of being wound without being cut off under conditions of an extrusion rate of 15 mm/min and a winding rate of 15 m/min from an orifice having a nozzle diameter of 2.095 mmφ and a nozzle length of 8 mm under conditions of a resin temperature of 190°C and a melting time of 6 min, and a melt tension (mN) being a resistance force generated at this time satisfies a following expression:

   ```
   melt tension ≤ 180 × e^(-0.7 × MFR) + 30.
   ```

5. The sealant film according to claim 1, wherein the ethylene polymer (A) has a ratio of an amount of heat of fusion (Hh/Ht) less than 10%, the ratio of the amount of heat of fusion (Hh/Ht) being an amount of heat of fusion (Hh) determined from a DSC curve at 120°C or higher to a total amount of heat of fusion (Ht) determined from a DSC curve of DSC measurement.

6. The sealant film according to claim 1, wherein the sealant film is composed of two layers, a laminate layer and a heat sealing layer, and at least the heat sealing layer is a layer composed of the ethylene polymer (A).

7. The sealant film according to claim 6, wherein the laminate layer is a layer composed of an ethylene polymer (C) satisfying following requirements (a) and (b):

   (a) a density is in a range of 900 to 940 kg/m$^3$; and
   (b) a melt flow rate (MFR) measured under conditions of 190°C and a load of 2.16 kg in accordance with JIS K7210-1 is in a range of 0.01 to 20 g/10 min.

8. The sealant film according to claim 1, wherein the sealant film is composed of three layers, a laminate layer, an intermediate layer, and a heat sealing layer, and at least the heat sealing layer is a layer composed of the ethylene polymer (A).

9. The sealant film according to claim 8, wherein the laminate layer is a layer composed of an ethylene polymer (C) satisfying following requirements (a) and (b):

   (a) a density is in a range of 900 to 940 kg/m$^3$; and
   (b) a melt flow rate (MFR) measured under conditions of 190°C and a load of 2.16 kg in accordance with JIS K7210-1 is in a range of 0.01 to 20 g/10 min.

10. The sealant film according to claim 8, wherein the intermediate layer is a layer composed of an ethylene polymer (C) satisfying following requirements (a) and (b):

    (a) a density is in a range of 900 to 940 kg/m$^3$; and

(b) a melt flow rate (MFR) measured under conditions of 190°C and a load of 2.16 kg in accordance with JIS K7210-1 is in a range of 0.01 to 20 g/10 min.

11. A laminate obtained by laminating a base material layer and the sealant film according to any one of claims 1 to 10.

12. The laminate according to claim 11, wherein lamination of the base material layer and the sealant film is carried out by bonding them by dry lamination.

13. A packaging bag formed from the laminate according to claim 11 or claim 12, the packaging bag having the sealant film as an inner surface.

14. The packaging bag according to claim 13 comprising a component derived from spice as a content.

## INTERNATIONAL SEARCH REPORT

| International application No. |
|---|
| **PCT/JP2021/046180** |

| A. | CLASSIFICATION OF SUBJECT MATTER |
|---|---|

***B32B 27/00***(2006.01)i; ***B32B 27/32***(2006.01)i; ***B65D 65/40***(2006.01)i
FI:   B32B27/00 M; B32B27/32 102; B65D65/40 D

According to International Patent Classification (IPC) or to both national classification and IPC

| B. | FIELDS SEARCHED |
|---|---|

Minimum documentation searched (classification system followed by classification symbols)
   B32B27/00; B32B27/32; B65D65/40

Documentation searched other than minimum documentation to the extent that such documents are included in the fields searched

   Published examined utility model applications of Japan 1922-1996
   Published unexamined utility model applications of Japan 1971-2022
   Registered utility model specifications of Japan 1996-2022
   Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2016-147430 A (MITSUI CHEMICALS TOHCELLO INC) 18 August 2016 (2016-08-18) claims, paragraphs [0002], [0007]-[0064] | 1-14 |
| X | WO 2012/070373 A1 (MITSUI CHEMICALS TOHCELLO INC) 31 May 2012 (2012-05-31) paragraphs [0002]-[0091], claims | 1-14 |
| X | JP 7-26079 A (MITSUBISHI CHEM CORP) 27 January 1995 (1995-01-27) paragraphs [0002]-[0061], examples 13, 17 | 1, 2, 4-6, 8, 11-14 |
| A | paragraphs [0002]-[0061], examples 13, 17 | 3, 7, 9, 10 |
| X | JP 2012-167172 A (DAINIPPON PRINTING CO LTD) 06 September 2012 (2012-09-06) paragraphs [0002]-[0067] | 1-5, 8-14 |
| A | paragraphs [0002]-[0067] | 6, 7 |
| X | JP 9-104468 A (KAUPATSUKU KK) 22 April 1997 (1997-04-22) paragraphs [0001], [0020] | 1, 3-5, 11-14 |
| A | paragraphs [0001], [0020] | 2, 6-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 February 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| | | International application No. |
|---|---|---|
| | | **PCT/JP2021/046180** |

| Patent document cited in search report | Publication date (day/month/year) | Patent family member(s) | Publication date (day/month/year) |
|---|---|---|---|
| JP 2016-147430 A | 18 August 2016 | (Family: none) | |
| WO 2012/070373 A1 | 31 May 2012 | TW 201228804 A whole document | |
| JP 7-26079 A | 27 January 1995 | US 5741861 A p. 3, column 1, line 8 to p. 12, column 19, line 53, Examples no. 13, 17 | |
| JP 2012-167172 A | 06 September 2012 | (Family: none) | |
| JP 9-104468 A | 22 April 1997 | (Family: none) | |

Form PCT/ISA/210 (patent family annex) (January 2015)

**EP 4 275 888 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012139848 A
- JP 2012139849 A
- JP 2012139854 A
- WO 2019181842 A
- JP H69724 A
- JP H6136195 A
- JP H6136196 A
- JP H6207057 A